Europäisches Patentamt

European Patent Office

Office européen des brevets

(11) Veröffentlichungsnummer: **0 519 206 A1**

# EUROPÄISCHE PATENTANMELDUNG

(21) Anmeldenummer: **92108057.8**

(51) Int. Cl.⁵: **B62D 1/11**, B62D 27/02

(22) Anmeldetag: **13.05.92**

(30) Priorität: **19.06.91 DE 4120222**

(43) Veröffentlichungstag der Anmeldung:
**23.12.92 Patentblatt 92/52**

(84) Benannte Vertragsstaaten:
**DE FR GB IT**

(71) Anmelder: **Dr.Ing.h.c. F. Porsche**
**Aktiengesellschaft**
**Porschestrasse 42**
**W-7000 Stuttgart 40(DE)**

(72) Erfinder: **Bäuerle, Hans-Peter**
**Falkenweg 8**
**W-7251 Weissach(DE)**

(54) **Deformationsglied für Kraftfahrzeuge.**

(57) Das Deformationsglied umfasst einen Rohrkörper, der bei axialer Beanspruchung Energie absorbiert. Der Rohrkörper wird durch zwei Rohrteile (5,6) mit unterschiedlichen Durchmessern gebildet, die örtlich zur Bildung eines Verbindungsabschnitts (7) ineinander geschoben sind. Im Bereich des Verbindungsabschnitts sind die Rohrteile, die aus einer Aluminiumlegierung bestehen, durch eine Klebeverbindung (10) miteinander verbunden.

Dieses Deformationsglied mit geringem Gewicht läßt sich in einfacher Weise in eine Lenkanlage oder eine Aufbaustruktur integrieren.

FIG.3

EP 0 519 206 A1

Die Erfindung betrifft ein Deformationsglied nach dem Oberbegriff des Patenanspruchs 1.

Ein bekanntes, durch einen Rohrkörper gebildetes Deformationsglied, DE 26 23 521 C3, ist zwischen Speichen eines Lenkrades sowie einer Nabe einer Lenkspindel vorgesehen, und es weist gute Energieaufnahmeeigenschaft auf.

Aufgabe der Erfindung ist es, ein Deformationsglied dieser Gattung weiter zu verbessern.

Erfindungsgemäß wird diese Aufgabe durch die kennzeichnenden Merkmale des Patentanspruchs 1 gelöst. Weitere die Erfindung ausgestaltende Merkmale sind in den Unteransprüchen enthalten.

Die mit der Erfindung hauptsächlich erzielten Vorteile sind darin zu sehen, daß der aus zwei Rohrteilen bestehende Rohrkörper bei geringem Gewicht, weil aus einer Aluminiumlegierung bestehend, einfach herstellbar ist und gute Eigenschaften zur gezielten und reproduzierbaren Energieaufnahme aufweist. Bei axialer Belastung des Rohrkörpers bilden sich am Rohrteil mit dem kleineren Durchmesser ohne besondere Vorkehrungen kontrollierte Ringfalten zu einem Paket, das sich wirkungsvoll am Ende des Rohrteils mit dem größeren Durchmesser abstützt. Das so gestaltete Deformationsglied eignet sich zum Einbau in eine Lenkanlage, eine Aufbaustruktur oder dergleichen.

In der Zeichnung werden Ausführungsbeispiele der Erfindung gezeigt, die nachstehend näher beschrieben sind.

Es zeigt

Fig. 1    einen Längsschnitt durch ein Deformationsglied, eingebaut in eine Aufbaustruktur eines Kraftfahrzeuges,

Fig. 2    eine Ansicht zur Erläuterung eines Montageschritts mit Bauteilen der Fig. 1

Fig. 3    eine Ansicht entsprechend Fig. 1 in kleinerem Maßstab, wobei das Deformationsglied in eine Lenkanlage eingebaut ist.

Das Deformationsglied 1 ist in zwei festen Aufnahmen 2, 3 z. B. einer Aufbaustruktur eines Kraftfahrzeuges durch geeignete Maßnahmen, wie Kleben, Schweißen oder dergleichen, gehalten. Dabei handelt es sich um einen Rohrkörper 4, vorzugsweise mit kreisrundem Querschnitt, der aus wenigstens zwei etwa gleich langen Rohrteilen 5, 6 mit unterschiedlichen Durchmessern D1<D2 besteht: D1 ist der Außendurchmesser des Rohrteils 5; D2 der Innendurchmesser des Rohrteils 6. Beide z.B. aus einer Aluminiumlegierung bestehenden Rohrteile 5, 6 sind zur Bildung eines Verbindungsabschnitts 7 ineinander geschoben, d.h. das Rohrteil 5 ruht mit einem inneren Rohrendbereich 8 in einem äußeren Rohrendbereich 9 des Rohrteils 6. Die Rohrteile 5, 6 sind durch Fügen, vorzugsweise eine ringartige Klebeverbindung 10, miteinander verbunden.

Die Klebeverbindung 10 wird durch einen Einkomponentenkleber gebildet, der über eine oder mehrere Bohrungen 11 am äußeren Rohrendbereich 9 in einem Ringraum zwischen dem inneren Rohrendbereich 8 und dem äußeren Rohrendbereich 9 eingebracht ist. Indessen besteht auch die Möglichkeit, die Klebeverbindung 10 durch einen Zweikomponentenkleber zu bilden. Bei dieser Ausführung ist eine erste Kleberkomponente 13 dem Rohrendbereich 8 und eine zweite Klebekomponente 14 dem Rohrendbereich 9 zugeordnet. Beide Kleberkomponente 13, 14 sind im vorgefertigten Zustand der Rohrteile 5, 6 auf diese aufgebracht.

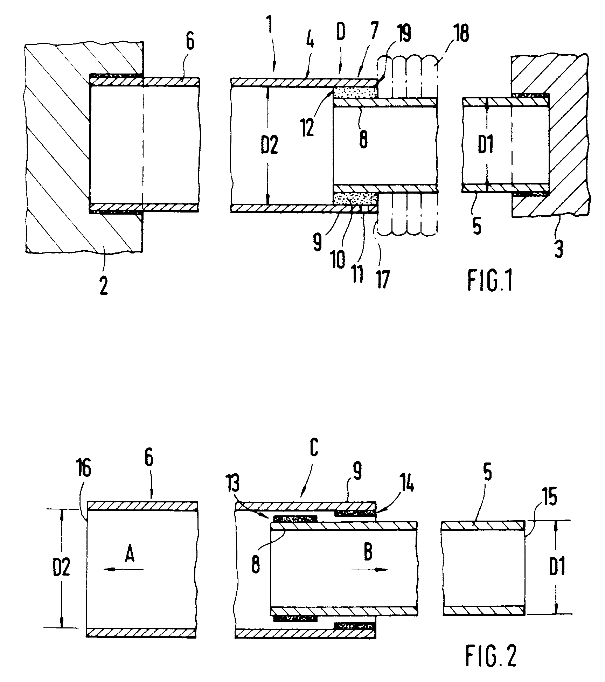

Ein vorteilhafter Zusammenbau der beiden Rohrteile 5, 6, die aufgrund ihrer Dimension D1<D2 teleskopartig verschiebbar sind, wird dann erreicht, wenn die den Kleberkomponenten 13, 14 abgekehrten Seiten 15, 16 der Rohrteile 5, 6 einander zugekehrt und durch Bewegung in Richtung A und B, und zwar aus einer Vormontagelage C -Figur 2- in eine konstruktive Endlage D -Figur 1-gebracht werden. In letzterer werden die Kleberkomponenten 13, 14 aktiviert. Dadurch, daß das Rohrteil 5 über seine Länge einen konstanten Durchmesser -innen und außen- aufweist, werden sich an ihn bei einer definierten axialen Druckbeanspruchung, hervorgerufen beispielsweise durch eine Havarie des Kraftfahrzeugs, ohne zusätzliche Vorkehrungen am Rohrteil 5, mehrere gleichmäßige Ringfalten 17 bilden. Dabei stützt sich eine erste Ringfalte 17 eines Ringfaltenpakets 18 direkt am Ende 19 des Rohrteils 6 ab. Die Dimensionierung des Rohrteile 5, 6 erfolgt zur zielgerichteten und reproduzierbaren Energieaufnahme empirisch und/oder durch computerunterstützte Rechenverfahren.

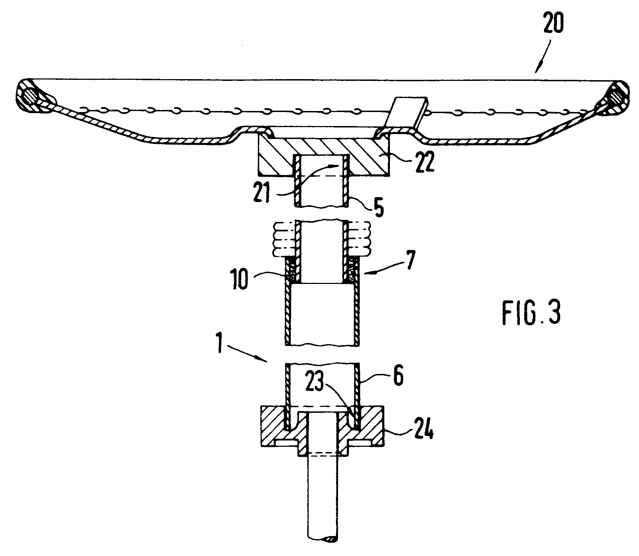

In Fig. 3 ist das Deformationsglied 1 in eine Lenkanlage 20 eingebaut. Das Rohrteil 5 ruht mit seinem freien Ende 21 fest in einer Lenkradnabe 21; das Rohrelement 6 mit seinem freien Ende 23 in einer Lenkspindelnabe 24.

**Patentansprüche**

1. Deformationsglied für Kraftfahrzeuge, das einen bei axialer Druckbeanspruchung energieabsorbierenden Rohrkörper umfaßt, **dadurch gekennzeichnet,** daß der Rohrkörper (4) wenigstens zwei vorzugsweise kreisrunden Querschnitt aufweisende Rohrteile (5,6)mit unterschiedlichen Durchmessern (D1<D2) umfaßt, die zur Bildung eines ineinander geschobenen Verbindungsabschnitts (7) einen inneren Rohrendbereich (8) und einen äußeren Rohrendbereich (9) aufweisen und am Verbindungsabschnitt (7) durch Fügen miteinander verbunden sind.

**2.** Deformationsglied nach Anspruch 1, **dadurch gekennzeichnet,** daß die Rohrteile (5, 6) über eine ringartige Klebeverbindung (10) miteinander verbunden sind.

**3.** Deformationsglied nach Anspruch 2, **dadurch gekennzeichnet,** daß die Klebeverbindung (10) durch einen Einkomponentenkleber gebildet wird, der beispielsweise über eine oder mehrere Bohrungen (11) am äußeren Rohrendbereich (9) in einen Ringraum (12) zwischen den Rohrendbereichen (8, 9) eingebracht ist.

**4.** Deformationsglied nach Anspruch 2, **dadurch gekennzeichnet,** daß die Klebeverbindung (10) durch einen Zweikomponentenkleber gebildet ist.

**5.** Deformationsglied nach Anspruch 4, **dadurch gekennzeichnet,** daß der Zweikomponentenkleber durch eine erste Kleberkomponente (13) des inneren Rohrendbereichs (8) und eine zweite Klebekomponente (14) des Rohrendbereiches (9) gebildet wird, wobei die beiden Kleberkomponenten (13, 14) im vorgefertigten Zustand der Rohrteile (5, 6) auf diese aufgebracht sind.

**6.** Deformationsglied nach einem oder mehreren der vorangehenden Ansprüche,**dadurch gekennzeichnet,** daß die Rohrteile (5, 6) derart aus einer Vormontagelage (C) in eine konstruktive Endlage (D) gebracht werden, daß die den Kleberkomponenten (13, 14) abgekehrten Enden (15, 16) der Rohrteile (5, 6) einander zugekehrt und dann bis zum Erreichen der konstruktiven Endlage (D) verschoben werden.

**7.** Deformationsglied nach Anspruch 6, **dadurch gekennzeichnet,** daß die Kleberkomponenten (13, 14) nach Erreichen der konstruktiven Endlage (C) aktiviert werden.

**8.** Deformationsglied nach einem oder mehreren der vorangehenden Ansprüche, **dadurch gekennzeichnet,** daß das Rohrteil (5) über einen wesentlichen Teil seiner Länge einen konstanten Querschnitt aufweist.

**9.** Deformationsglied nach einem oder mehreren der vorangehenden Ansprüche, **dadurch gekennzeichnet,** daß die Rohrteile (5, 6) aus einer Aluminiumlegierung bestehen.

**10.** Deformationsglied nach einem oder mehreren der vorangehenden Ansprüche, **dadurch gekennzeichnet,** daß es zum Einbau in eine Lenkanlage so ausgebildet ist.

**11.** Deformationsglied nach einem oder mehreren der vorangehenden Ansprüche, **dadurch gekennzeichnet,** daß es zum Einbau in eine Aufbaustruktur ausgebildet ist.

FIG.1

FIG.2

FIG.3

Europäisches
Patentamt

**EUROPÄISCHER RECHERCHENBERICHT**

Nummer der Anmeldung

EP    92 10 8057

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 181 700 (BRITISH PETROLEUM) <br> * Seite 3, Zeile 25 - Seite 4, Zeile 21; Abbildungen 2-3C * <br> --- | 1,2,8,10 | B62D1/11 <br> B62D27/02 |
| A | PATENT ABSTRACTS OF JAPAN <br> vol. 8, no. 203 (M-326)18. September 1984 <br> & JP-A-59 092 256 ( MITSUBISHI ) 28. Mai 1984 <br> * Zusammenfassung * <br><br> ----- | 1,10 | |
| | | | **RECHERCHIERTE SACHGEBIETE (Int. Cl.5)** <br><br> B62D |

Der vorliegende Recherchenbericht wurde für alle Patentansprüche erstellt

| Recherchenort | Abschlußdatum der Recherche | Prüfer |
|---|---|---|
| BERLIN | 27 AUGUST 1992 | BROYDE M. |